# FASCICULE DE BREVET EUROPEEN

(11) **EP 0 439 434 B1**
(45) Date de publication et mention de la délivrance du brevet: **11.08.1993**
(21) Numéro de dépôt: 91810052.0
(22) Date de dépôt: 23.01.1991
(51) Int. Cl.: B60R 25/10, G08B 15/02

(54) **Système d'alarme pour véhicules transporteurs de fonds**
Alarmsystem für gepanzerte Fahrzeuge mit Wertgegenständen
Alarm system for armoured trucks carrying valuables

(30) Priorité: 26.01.1990 CH 261/90
(43) Date de publication de la demande: 31.07.1991
(73) Titulaire: Atdjian, Jean-Paul, F-06000 Nice (FR)
(72) Inventeur: Atdjian, Jean-Paul, F-06000 Nice (FR)
(74) Mandataire: Seehof, Michel

(56) Documents cités:
- FR-A- 2 485 234
- US-A- 4 461 222

## Description

La présente invention se rapporte à un système d'alarme destiné à être installé dans un véhicule utilisé et équipé pour transporter des sommes d'argent importantes, des bijoux, des lingots de métal précieux, des dossiers secrets, etc.

Il est bien connu que des véhicules automobiles spécialement équipés et normalement blindés sont utilisés pour transporter des fonds (selon la définition donnée ci-dessus) d'un bâtiment à un autre, par exemple d'un supermarché à une banque ou d'une banque à une entreprise, le jour de la paie. Ces transports sont naturellement sensibles aux attaques d'individus espérant faire un butin important. Ces malfaiteurs, vu l'importance de la valeur de ces transports, investissent des sommes considérables dans leur "opération", de sorte que les véhicules transporteurs doivent être équipés en conséquence. Malgré tous les dispositifs de sécurité employés et toutes les précautions prises, ces opérations sont fréquentes et assez souvent couronnées de succès.

Selon le brevet US-A-4 461 222, on a réalisé récemment une nouvelle idée pour protéger encore davantage les valeurs transportées. Lors d'une attaque, par exemple quand la porte du véhicule est ouverte, soit avec une fausse clé, soit par la force, un dispositif automatique fait jaillir dans l'intérieur du véhicule - sauf dans la cabine du conducteur, bien entendu - des liquides chimiques qui réagissent en formant une mousse à durcissement rapide, par exemple une mousse de polyuréthane. Cette mousse monte depuis le sol du véhicule et, en durcissant rapidement, renferme et bloque la cargaison sans la détériorer mais en la rendant irrécupérable par les agresseurs, du moins pour un certain temps.

Le plus grand désavantage de ce système est le fait qu'il n'empêche pas le vol du véhicule entier suivi de la destruction de la mousse solidifiée. En règle générale, ces individus neutralisent d'abord l'équipe de sécurité se trouvant à bord du véhicule en l'empêchant d'intervenir ou de donner l'alarme et d'alerter ainsi les forces de l'ordre. Une alarme, par exemple une sirène puissante, a un effet dissuasif certain qui fait souvent fuir les assaillants impuissants. Les dispositifs d'alarme automatiques électroniques peuvent également être mis hors service très rapidement. Ceci laisse le temps aux assaillants de vider quand même le véhicule ou de le transférer dans un endroit caché.

L'invention a pour objet de pallier les inconvénients des dispositifs transporteurs de fonds et de réaliser un système d'alarme qui ne peut être mis hors service qu'après un temps très prolongé ou même pas du tout.

Cet objet est atteint par le système d'alarme pour véhicules transporteurs de fonds équipés d'un dispositif pour produire, en cas d'attaque, une mousse à durcissement rapide dans l'espace de chargement afin de bloquer la charge, système qui est défini dans la partie originale de la revendication indépendante. Les exécutions et caractères préférés font l'objet des revendications dépendantes.

Le professionnel saura adapter facilement le système selon l'invention dans les véhicules concernés. Différentes possibilités de réalisation seront décrites dans ce qui suit, en se référant au dessin annexé dans lequel :
- la Fig.1 est une vue en plan, tout à fait schématique, d'un camion transporteur de fonds équipé du système selon l'invention, et
- la Fig.2 est une représentation schématique d'un autre dispositif de commande du système d'alarme de la Fig. 1.

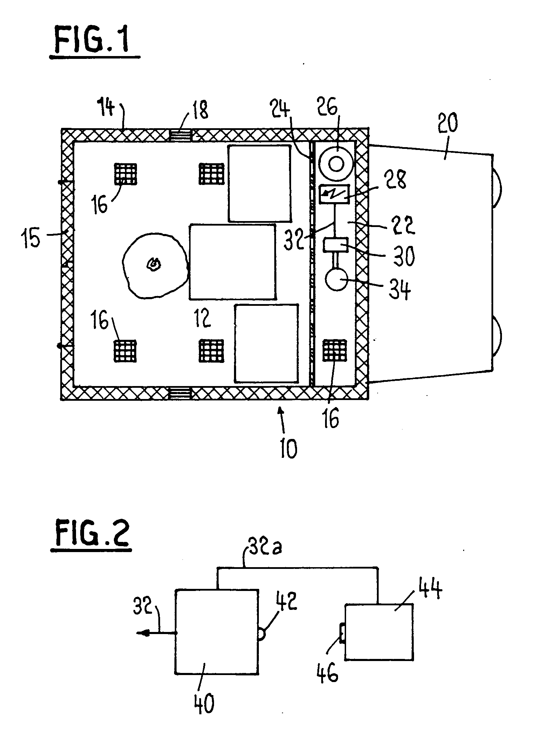

On voit dans la Fig.1 , en plan, l'intérieur d'un camion 10, dont l'espace de chargement 12 - des caisses et des sacs - est blindé par des parois 14 et la porte 15. La cargaison repose sur une grille non représentée. Des ouvertures protégées par des grilles 16 sont pratiquées dans le plancher du pont de chargement ainsi que dans les parois (blocs 18) et dans le plafond (non représentées). Des tuyaux non représentés débouchent dans ces ouvertures pour amener, en cas d'ouverture non autorisée du camion ou commandée par un conducteur ou convoyeur se trouvant dans la cabine 20, le liquide formant la mousse se déversant à l'intérieur de l'espace de chargement, pour réaliser une mousse qui monte très vite en durcissant.

Un cabinet 22 spécialement blindé par des parois 24 est situé adjacent à la cabine 20. Les parois 24 sont perforées (ce qui n'est pas représenté) de sorte que la mousse en formation monte également dans le cabinet 22. Une amenée directe de liquide formant la mousse peut également être prévue dans le cabinet 22.

Dans le cabinet 22 se trouve un dispositif d'alarme sonore comprenant une bouteille d'air comprimé 26, une boite de commande électronique 28 et un dispositif de commande 30 relié par le câble 32 à la boite 28 et placé à proximité du plancher du camion. Le dispositif de commande 30 est équipé d'un flotteur 34.

Lorsque la mousse monte, lors du déclenchement du dispositif y relatif (non représenté), dans l'espace de chargement, elle monte également dans le cabinet 22. Lorsque le niveau de la mousse, très rapidement, atteint le flotteur 34, celui-ci est poussé vers le haut et active le dispositif de commande 28 où un interrupteur est fermé. Par la suite, la boite électrique ouvre la bouteille d'air comprimé 26, qui fait hurler une sirène pneumatique (non représentée). En même temps un émetteur de détresse incorporé dans la boite 28 émet des signaux d'alarme et de position (ces derniers étant fournis par un micro-ordinateur retraçant le chemin parcouru par le camion) sur un canal correspondant à un récepteur placé dans un bâtiment ou une voiture de police.

La sirène est actionnée par l'air comprimé, car il n'est généralement pas possible de prévoir une source de courant électrique assez puissante dans le cabinet 22. Les dispositifs électriques sont alimentés par une batterie indépendante qui se trouve dans la boite 28 et qui peut être chargée ou non par la dynamo du camion.

Dans la Fig.2 , le dispositif 30, 34 de la Fig.1 est remplacé par une source de lumière (visible ou non) 40 dont la lampe 42 irradie la cellule photoélectrique 46 du récepteur 44, relié par le câble 32A à l'émetteur 40. Une matière qui coupe le rayon lumineux entre la lampe 42 et la cellule 46, donc la mousse montant, active un interrupteur dans la boite 40 qui, à son tour, met en marche le système d'alarme décrit ci-dessus.

IL va de soi qu'un nombre assez important de modifications et de variations peut être prévu, surtout en ce qui concerne le dispositif de détection de mousse montante. Il conviendrait en pratique de prévoir pour presque chaque camion à équiper, un autre système de détection, soit mécanique, électrique, capacitif, magnétique, lumineux, pneumatique, etc. pour éviter une neutralisation éventuelle par des malfaiteurs. Il est également possible de prévoir plus qu'un seul dispositif de détection.

## Revendications

1. Système d'alarme pour véhicules transporteurs de fonds équipés d'un dispositif pour produire, en cas d'attaque, une mousse à durcissement rapide dans l'espace de chargement (12), afin de bloquer la charge, et caractérisé par un dispositif d'alarme (26-34) sonore se trouvant dans un cabinet (22) spécialement blindé par des parois (24), les parois (24) étant perforées de sorte que la mousse en formation monte également dans ledit cabinet (22), ledit dispositif d'alarme (26-34) étant
déclenché par au moins un dispositif de commande (30,34) agencé pour détecter la mousse montante en formation.

2. Système selon la revendication 1, original parce que le dispositif d'alarme sonore (26-34) est une sirène pneumatique entraînée par l'air comprimé stocké dans une bouteille d'air comprimé (26).

3. Système selon la revendication 1, défini par un dispositif de détection (30,34) qui est un flotteur (34) actionnant un interrupteur électrique.

4. Système selon la revendication 1, se distingue parce qu'il comprend en plus un émetteur de détresse donnant l'alerte par ondes radio et activé par le dispositif de détection.

5. Système selon la revendication 1, dont la particularité est un dispositif de détection de nature photoélectrique (40-46).

## Patentansprüche

1. Alarmsystem für Wertsachentransport-Fahrzeuge, die mit einer Einrichtung ausgestattet sind, welche bei einem Überfall einen schnellhärtenden Schaum im Laderaum (12) erzeugt, um die Ladung zu blockieren, gekennzeichnet durch eine akustische Alarmvorrichtung (26 - 34) in einem durch Wände (24) besonders gepanzerten Abteil (22), wobei die Wände derart durchbrochen sind, dass der sich bildende Schaum auch im Abteil (22) aufsteigt und die Alarmvorrichtung (26 - 34) von mindestens einem Steuergerät (30, 34) ausgelöst wird, welches zur Feststellung von aufsteigendem, sich bildendem Schaum ausgebildet ist.

2. System nach Anspruch 1, dadurch gekennzeichnet, dass die akustische Alarmvorrichtung (26 - 34) eine Luftdrucksirene ist, die von Pressluft in Betrieb gesetzt wird, welche sich in einer Pressluftflasche (26) befindet.

3. System nach Anspruch 1, gekennzeichnet durch ein Detektorgerät (30, 34), welches einen Schwimmer (34) aufweist, der einen elektrischen Schalter betätigt.

4. System nach Anspruch 1, dadurch gekennzeichnet, dass es weiterhin einen Notfallsender aufweist, der einen Alarm über Funk auslöst und vom Steuergerät in Betrieb gesetzt wird.

5. System nach Anspruch 1, gekennzeichnet durch ein photoelektrisch arbeitendes Detektorgerät (40 - 46).

## Claims

1. Alarm system for trucks carrying valuables, equipped with a device for producing, in the case of a raid, a rapidly hardening foam within the loading space (12) in order to block the load, characterized by an acustic alarm device (26 - 34) arranged within a compartment (22) specially armoured by walls (24) being perforated in such a manner that the foam in formation raises in this compartment (22) too, said alarm device (26 - 34) being put into action by at least one control device (30, 34) designed for detecting the raising foam in formation.

2. The system of claim 1, wherein the acustic alarm device (26 - 34) is a pneumatic siren driven by compressed air held in a compressed air bottle (26).

3. The system of claim 1, comprising a detector device (30, 34) which is a float (34) operating an electric switch.

4. The system of claim 1, further comprising an emergency transmitter for sending alarm signals by radio, said transmitter being activated by the detector device.

5. The system of claim 1, comprising a photoelectric detector device (40 - 46).
